(19) **Europäisches Patentamt**

**European Patent Office**

**Office européen des brevets**

(11) **EP 0 988 714 B1**

(12) **EUROPÄISCHE PATENTSCHRIFT**

| | |
|---|---|
| (45) Veröffentlichungstag und Bekanntmachung des Hinweises auf die Patenterteilung:<br>**19.12.2001   Patentblatt 2001/51** | (51) Int Cl.⁷: **H04B 7/005** |
| (21) Anmeldenummer: **98934836.2** | (86) Internationale Anmeldenummer:<br>**PCT/DE98/01486** |
| (22) Anmeldetag: **29.05.1998** | (87) Internationale Veröffentlichungsnummer:<br>**WO 98/57441 (17.12.1998 Gazette 1998/50)** |

(54) **VERFAHREN UND EMPFANGSEINRICHTUNG ZUR DATENÜBERTRAGUNG**

METHOD AND RECEIVER FOR TRANSMITTING DATA

PROCEDE ET DISPOSITIF DE RECEPTION POUR LA TRANSMISSION DE DONNEES

| | |
|---|---|
| (84) Benannte Vertragsstaaten:<br>**DE ES FI FR GB IT SE** | (56) Entgegenhaltungen:<br>  **EP-A- 0 767 543**        **US-A- 5 127 051**<br>  **US-A- 5 293 401** |
| (30) Priorität: **09.06.1997  DE 19724248** | • **GHASSAN KAWAS KALEH: "CHANNEL EQUALIZATION FOR BLOCK TRANSMISSION SYSTEMS" IEEE JOURNAL ON SELECTED AREAS IN COMMUNICATIONS, Bd. 13, Nr. 1, 1. Januar 1995, Seiten 110-121, XP000492749** |
| (43) Veröffentlichungstag der Anmeldung:<br>**29.03.2000   Patentblatt 2000/13** | • **CROZIER S N ET AL: "REDUCED COMPLEXITY SHORT-BLOCK DATA DETECTION TECHNIQUES FOR FADING TIME-DISPERSIVE CHANNELS" IEEE TRANSACTIONS ON VEHICULAR TECHNOLOGY, Bd. 41, Nr. 3, 1. August 1992, Seiten 255-264, XP000311723** |
| (73) Patentinhaber: **SIEMENS AKTIENGESELLSCHAFT**<br>**80333 München (DE)** | |
| (72) Erfinder: **SCHREIB, Franz**<br>**D-81475 München (DE)** | • **COX R V ET AL: "AN EFFICIENT ADAPTIVE CIRCULAR VITERBI ALGORITHM FOR DECODING GENERALIZED TAILBITING CONVOLUTIONAL CODES" IEEE TRANSACTIONS ON VEHICULAR TECHNOLOGY, Bd. 43, Nr. 1, 1. Februar 1994, Seiten 57-68, XP000450947** |

**Beschreibung**

Die Erfindung betrifft ein Verfahren und eine Einrichtung zur Datenübertragung über eine Funkschnittstelle zwischen Funkstationen in einem Funk-Kommunikationssystem.

Funk-Kommunikationssysteme dienen der Übertragung von Daten mit Hilfe von elektromagnetischen Wellen über eine Funkschnittstelle zwischen einer sendenden und einer empfangenden Funkstation. Ein Beispiel für ein Funk-Kommunikationssystem ist das bekannte GSM-Mobilfunknetz, bei dem zur Übertragung eines Teilnehmersignals jeweils ein durch einen schmalbandigen Frequenzbereich und einen Zeitschlitz gebildeter Kanal vorgesehen ist. Da ein Teilnehmersignal in einem Kanal in Frequenz und Zeit von übrigen Teilnehmersignalen getrennt ist, kann die empfangende Funkstation eine Detektion der Daten dieses Teilnehmersignals vornehmen.

Aus dem GSM-Mobilfunksystem ist es bekannt, in die Daten des Teilnehmersignals eingebettete Trainingssequenzen zu verwenden, die empfangsseitig bekannt sind und zum Bestimmen von Kanalkoeffizienten dienen. Die Kanalkoeffizienten bilden dabei den Kanal der Funkübertragung nach und erleichtern den Ausgleich von Störungen bei der nachfolgenden Datendetektion.

Der dem GSM-Mobilfunknetz zur Verfügung stehende Frequenzbereich ist beschränkt und führt zunehmend zu Kapazitätsengpässen, besonders in Gebieten mit hoher Teilnehmerdichte. Die Kapazität des GSM-Mobilfunknetzes ist dabei durch die Anzahl der in einer Funkzelle möglichen Kanäle beschränkt. Eine Möglichkeit, diese Kapazität zu erhöhen ist es, eine sog. Halbraten-Übertragung (Half Rate) einzuführen. Diese Halbraten-Übertragung setzt für Sprache eine verbesserte Quellencodierung voraus, so daß nur die Hälfte der bisher benötigten Zeitschlitze für die Übertragung der gleichen Datenmenge ausreicht. Diese Halbratencodierung ist jedoch nur auf Sprachinformationen anwendbar.

Der Erfindung liegt somit die Aufgabe zugrunde, ein Verfahren einer Empfangseinrichtung zur Datenübertragung anzugeben, die eine Kapazitätserhöhung unabhängig von der Bedeutung der zu übertragenden Daten schafft. Diese Aufgabe wird durch das Verfahren mit den Merkmalen des Patentanspruchs 1 und die Empfangseinrichtung mit den Merkmalen des Patentanspruchs 13 gelöst. Weiterbildungen der Erfindung sind den Unteransprüchen zu entnehmen.

Erfindungsgemäß werden sendeseitig zu übertragende Daten in Funkblöcken gruppiert, wobei die Funkblöcke jeweils zusätzliche Symbole einer Trainingssequenz enthalten. In einem Kanal werden daraufhin gleichzeitig zumindest zwei Funkblöcke mit unterschiedlichen Trainingssequenzen übertragen, worauf empfangsseitig unter Kenntnis der zumindest zwei Trainingssequenzen eine Detektion der Daten durchgeführt wird. Das Verfahren kann jedoch auch für eine größerere Anzahl von Funkblöcken angewendet werden.

Indem bei der Auswahl der Trainingssequenzen sichergestellt wird, daß sich diese bei gleichzeitig übertragenen Funkblöcken immer unterscheiden, kann durch dieses Charakteristikum eines Funkblockes die empfangsseitige Separierung der Teilnehmersignale erfolgen. Die zu übertragenden Daten der zwei Funkblöcke können dabei beliebig sein. Für diese Daten und das Verhältnis der einzelnen Symbole zueinander müssen keine Einschränkungen beachtet werden. Somit schafft das erfindungsgemäße Verfahren eine Kapazitätserhöhung, zumindest um den Faktor 2 wenn Daten beider Funkblöcke ausgewertet werden, der nicht nur auf Sprachinformationen beschränkt ist, sondern auch auf weitere Dienste angewendet werden kann.

Es kann alternativ vorgesehen sein, daß empfangsseitig nur die Daten eines Funkblocks detektiert werden, wobei die Kenntnis über den weiteren Funkblock zur Verbesserung der Detektion benutzt wird. Hiermit wird eine Verbesserung der Störfestigkeit einer Verbindung erreicht. Somit sind auch die Störungen aus benachbarten Zellen kompensierbar. Damit können größere Störungen im System zugelassen werden, wodurch entweder eine verbesserte Frequenzwiederbenutzung oder eine höhere Teilnehmerdichte möglich wird.

Nach einer Weiterbildung der Erfindung erfolgt eine Synchronisation der empfangenen Daten, die gleichzeitig im gleichen Kanal übertragen werden. Unterschiedliche Laufwege der Teilnehmersignale führen zu unterschiedlichen Zeitpunkten des Eintreffens bei der empfangenen Funkstation, so daß es besonders wichtig ist, durch eine Synchronisation das Eintreffen der zwei Funkblöcke aufeinander abzustimmen, und damit folgende Schritte zur Kanalschätzung und Datendetektion zu erleichtern. Die Synchronisation wird durch eine Signalisierung zu den sendenden Funkstationen vorbereitet, die daraufhin die Sendezeitpunkte einstellen können. Die Synchronisation kann auch empfangsseitig erfolgen; in diesem Fall ist keine Signalisierung zu den sendenden Funkstationen nötig.

Vorteilhafterweise wird durch die Synchronisation eine zeitliche Abweichung des Eintreffens der zumindest zwei Funkblöcke bei der empfangsseitigen Funkstation eingestellt, die kleiner als eine Symbollänge ist. Werden also die Sendezeitpunkte der sendenden Funkstation per Signalisierung derart eingestellt, daß geringe Abweichung zwischen den Zeitpunkten des Eintreffens der zumindest zwei Funkblöcke vorliegen, so kann eine Bitfehlerrate der Datenübertragung durch verbesserte Detektion gering gehalten werden.

Nach einer weiteren Ausprägung der Erfindung werden einer sendenden Funkstation zumindest zwei Trainingssequenzen zugewiesen. Durch diese Maßnahmen kann dieser Funkstation eine verdoppelte Datenrate ermöglicht werden. Für diese Funkstation ist kein zusätzlicher Hardwareaufwand nötig, lediglich die Signalverarbeitung in der empfangenen Funkstation muß entsprechend angepaßt werden. Dies kann ggf. durch eine Neuprogrammierung des entsprechenden Signalprozessors erfolgen.

Sind die Funkstationen als Mobilstationen oder Basisstationen eines digitalen Mobilfunknetzes ausgebildet, dann wird die Übertragungsrichtung von der Mobilstation zur Basisstation als Aufwärtsrichtung und die Übertragungsrichtung von Basisstationen zur Mobilstation als Abwärtsrichtung bezeichnet. Gemäß einer Weiterbildung der Erfindung werden in Aufwärtsrichtung und Abwärtsrichtung unterschiedliche Übertragungsraten verwendet. Damit werden asymmetrische Dienste möglich, die den Besonderheiten der Anforderungen an die zu übertragenden Daten besser gerecht werden können. Vorteilhafterweise werden in Aufwärtsrichtung Funkblöcke höhere Datenraten als in Abwärtsrichtung verwendet. D.h. die Mobilstationen empfangen wie bisher, sie senden jedoch mit anderen Mobilstationen gleichzeitig in einem Kanal und erhöhen somit die Datenrate in Aufwärtsrichtung. Damit muß die Schaltungstechnik von Mobilstationen nicht verändert werden, in der Basisstation kann durch entsprechende Anpassung der Signalverarbeitung eine Verdoppelung der Kapazität der Datenübertragung in Aufwärtsrichtung erreicht werden.

Besondere Vorteile zeigt das erfindungsgemäße Verfahren, wenn die übertragenen Daten entsprechend eines Paketdatendienstes (GPRS General Packet Radio Services) übertragen werden. Die Datenraten müssen bei diesem Dienst leicht änderbar und die funktechnischen Ressourcen der Funkschnittstelle flexibel ausnutzbar sein. Dies kann durch das erfindungsgemäße Verfahren verwirklicht werden.

Im folgenden wird die Erfindung anhand eines Ausführungsbeispiels unter Bezugnahme auf die Figuren näher erläutert.

Dabei zeigen

FIG 1 ein Blockschaltbild eines Funk-Kommunikationssystems,

FIG 2 bis 4 verschiedene Varianten von Datenraten für die erfindungsgemäße Datenübertragung,

FIG 5 eine Blockschaltbild einer Empfangseinrichtung,

FIG 6 ein Blockschaltbild eines Kanalschätzers, und

FIG 7 einen Zustandsdiagramm für die Datendetektion.

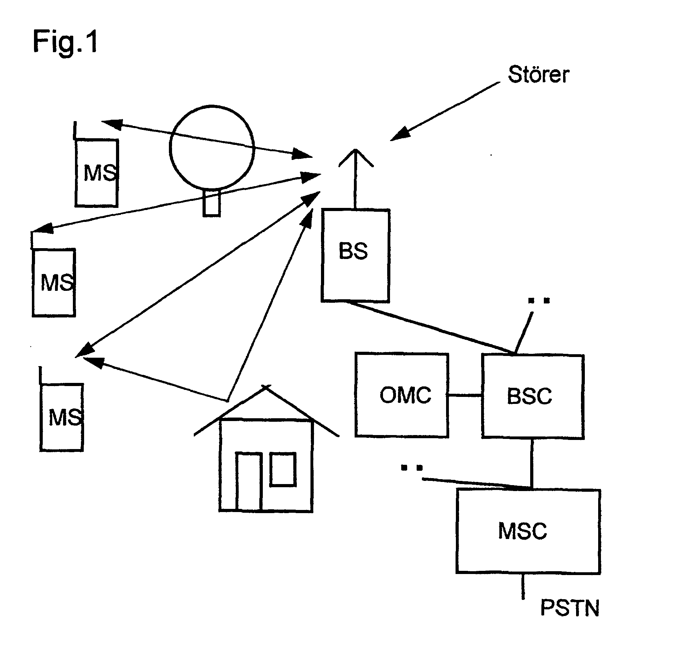

Ein in FIG 1 dargestelltes Funk-Kommunikationssytem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS und nimmt die Verwaltung der funktechnischen Ressourcen der angeschlossenen Basisstatione BS vor. Eine solche Basisstation BS ist eine Funkstation, die über eine Funkschnittstelle eine Nachrichtenverbindung zu Mobilstationen MS aufbauen kann.

In FIG 1 sind beispielhaft drei Verbindungen zur Übertragung von Daten, die Nutzinformationen und Signalisierungsinformationen darstellen können, zwischen drei Mobilstationen MS und einer Basisstation BS gezeigt. Ein Operations- und Wartungszentrum OMC realisiert Kontroll- und Wartungsfunktionen für das Mobilfunknetz bzw. für Teile davon. Die Funktionalität dieser Struktur ist auch auf anderer Funk-Kommunikationssysteme übertragbar, in denen die Erfindung zum Einsatz kommen kann.

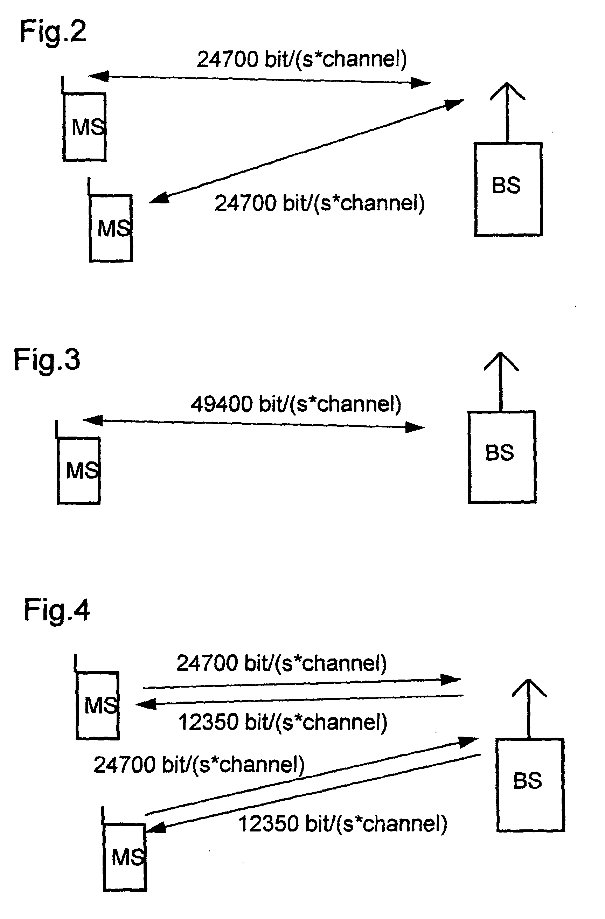

Die FIG 2 bis 4 zeigen unterschiedliche Anwendungen eines Verfahrens zur Datenübertragung über eine Funkschnittstelle zwischen Mobilstationen MS und einer Basisstation BS. Die Anwendungen unterscheiden sich in den Datenraten, die in Aufwärts- oder Abwärtsrichtung für die Datenübertragung verwendet werden.

FIG 2 zeigt die Datenübertragung zwischen einer Basisstation BS und zwei Mobilstationen MS. Sowohl in Aufwärts- als auch in Abwärtsrichtung werden Datenraten von 24700 Bit pro s und Kanal verwendet. Ein Kanal ist dabei durch einen Frequenzbereich und einen Zeitschlitz charakterisiert. 24700 Bit/s ist dabei die übliche Datenrate für einen Kanal eines GSM-Mobilfunknetzes, das bisher nur von einer Mobilstation MS benutzt wurde. Indem in diesem Kanal die Datenübertragung dieser Datenrate zu zwei Mobilstationen MS möglich ist, wird die gesamte über diesen Kanal übertragene Datenrate verdoppelt. Dazu müssen sowohl in Mobilstationen MS als auch in der Basisstation BS entsprechende Änderungen der Signalverarbeitung eingeführt werden.

In FIG 3 wird einer einzigen Mobilstation die doppelte Datenrate mit 49400 Bit pro s und Kanal zugewiesen. Dies bedeutet, daß sowohl in Aufwärtsrichtung als auch in Abwärtsrichtung der Verbindung zwischen Mobilstation MS und Basisstation BS zwei Trainingssequenzen, wie später gezeigt, zugewiesen werden. Auch hierbei sind empfangsseitig und sendeseitig Anpassungen der Signalverarbeitung vorzunehmen.

FIG 4 zeigt eine weitere Anwendung der Datenübertragung zwischen einer Basisstation BS und zwei Mobilstationen MS, wobei die Mobilstationen MS übliche bisher verwendete Mobistationen sein können. In Abwärtsrichtung wird eine halbierte Datenrate mit 12350 Bit/s und Kanal verwendet. Dies bedeutet beispielsweise, daß nur jeder zweite Zeitschlitz eines Kanals von jeweils einer Mobilstation ausgewertet wird. Beide Mobilstationen MS teilen sich somit einen Kanal. In Aufwärtsrichtung übertragen jedoch beide Mobilstationen MS gleichzeitig in einem Kanal mit der üblichen Bitrate. Bei dieser Anwendung muß nur eine Anpassung der Basisstation BS erfolgen.

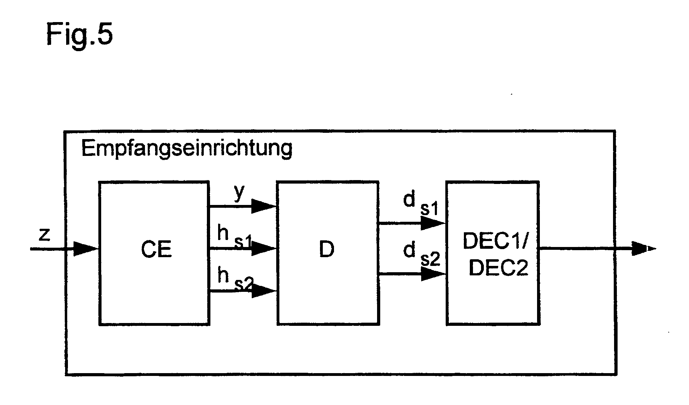

Eine Empfangseinrichtung zur Durchführung des Datenübertragungsverfahrens ist in FIG 5 gezeigt. Die Empfangseinrichtung enthält einen Kanalschätzer CE und einen Detektor D. Der Kanalschätzer empfängt Antennendaten z von einer analogen Hochfrequenzeinheit - nicht dargestellt -, die die Antennendaten als komplexes Basisbandsignal erzeugt. Der Kanalschätzer CE nimmt eine Synchronisation des Eingangsdatenstromes vor, so daß ein synchronisierter Ausgangsdatenstrom y abgegeben wird.

Weiterhin wird im Kanalschätzer CE zur gleichzeitigen Kanalschätzung für zumindest zwei gleichzeitig im gleichen Kanal übertragene Funkblöcke eine Auswertung von in den Funkblöcken zusätzlich zu den Daten d übertragene verbindungsindividuelle Trainingssequenzen tc1, tc2 ausgewertet. Mit Hilfe dieser Auswertung werden die Kanalimpulsantworten beider Verbindungen bestimmt, die als Kanalkoeffizienten $h_{s1}$, $h_{s2}$ ebenfalls vom Kanalschätzer CE abgegeben werden.

Der Detektor D nimmt die synchronisierten Daten y und die Kanalkoeffizienten h auf und führt die Datendetektion für beide Verbindungen durch. Im Ergebnis der Datendetektion liegen die detektierten Daten $d_{s1}$, $d_{s2}$ für beide Verbindungen vor. Die detektierten Daten $d_{s1}$, $d_{s2}$ werden weiteren Einrichtungen der empfangenden Funkstation zugeführt, die daraufhin eine Dekodierung und gegebenenfalls weitere Verarbeitungsvorgänge, z.B. Dekodierung in Dekodern DEC1, DEC2, Entschlüsselung, Entschachtelung u.s.w., durchführen. Die Symbole der Daten $d_{s1}$, $d_{s2}$ repräsentieren die durch Entzerrung und Fehlerkorrektur rekonstruierten gesendeten Daten d.

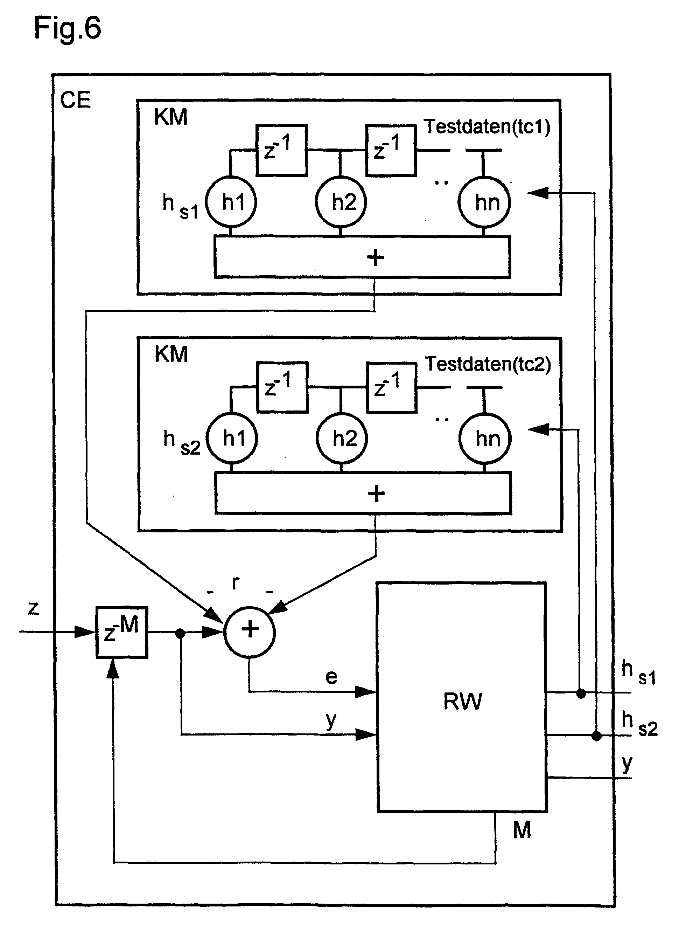

In FIG 6 ist der Kanalschätzer CE gezeigt. Dieser enthält zwei Kanalmodelle KM, die die Übertragungsbedingungen für die zwei Verbindungen nachbilden sollen. Die Kanalmodelle KM modellieren Verzögerungsglieder $Z^{-1}$, die kettenförmig angeordnet sind. Testdaten, die den empfangsseitig bekannten Trainingssequenzen tc1, tc2 entsprechen, werden in das Kanalmodell eingespeist und durchlaufen diese Verzögerungsglieder $Z^{-1}$. Die unverzögerten Testdaten und die am Ausgang eines jeden Verzögerungsgliedes $Z^{-1}$ anliegend verzögerten Testdaten werden jeweils mit einem Kanalkoeffizienten h (h1, h2, ..hn) in einer Bewertungseinheit BE bewertet und anschließend zu Modelldaten r aufsummiert.

In den Kanalmodellen KM wird die Mehrwegeausbreitung simuliert, wobei nacheinander eintreffende Signalkomponenten zu einem gemeinsamen Signal überlagert werden. Es reichen drei bis vier Verzögerungsglieder $Z^{-1}$ aus, um diese Mehrwegeausbreitung auszugleichen. Somit ist das Kanalmodell KM durch einen Filter mit endlicher Impulsantwort realisiert.

Zur Aufstellung des Kanalmodells werden die Daten d der zwei Verbindungen in jeweils einer Töplizmatrix gruppiert, wobei die Daten eines ersten Funkblocks Teil der Matrix $D_{S1}$ und die Daten eines zweiten Funkblocks Teil der Matrix $D_{S2}$ sind.

$$\tilde{D}_{s1} = \begin{bmatrix} d_5^{(s1)} & d_4^{(s1)} & .. & d_1^{(s1)} \\ d_6^{(s1)} & d_5^{(s1)} & .. & d_2^{(s1)} \\ d_7^{(s1)} & d_6^{(s1)} & .. & d_3^{(s1)} \\ .. & .. & .. & .. \end{bmatrix} \quad (1) \qquad \tilde{D}_{s2} = \begin{bmatrix} d_5^{(s2)} & d_4^{(s2)} & .. & d_1^{(s2)} \\ d_6^{(s2)} & d_5^{(s2)} & .. & d_2^{(s2)} \\ d_7^{(s2)} & d_6^{(s2)} & .. & d_3^{(s2)} \\ .. & .. & .. & .. \end{bmatrix} \quad (2)$$

Jede der Verbindungen kann durch eine Kanalimpulsantwort beschrieben werden, wobei die Kanalkoeffizienten h der ersten Verbindung mit dem Vektor $h_{s1}$ und die Kanalkoeffizienten der zweiten Verbindung $h_{s2}$ beschrieben werden.

$$\underline{h}_{s1} = \begin{bmatrix} h_1^{(s1)} \\ .. \\ h_5^{(s1)} \end{bmatrix} \quad (3) \qquad \underline{h}_{s2} = \begin{bmatrix} h_1^{(s2)} \\ .. \\ h_5^{(s2)} \end{bmatrix} \quad (4)$$

Die synchronisierten empfangenen Daten y können somit beschrieben werden durch:

$$\underline{y} = \bar{D}_{s1} \cdot \underline{h}_{s1} + \bar{D}_{s2} \cdot \underline{h}_{s2} = \left[\bar{D}_{s1} \quad \bar{D}_{s2}\right] \cdot \begin{bmatrix} \underline{h}_{s1} \\ \underline{h}_{s2} \end{bmatrix} \qquad (5)$$

Aufgabe des Kanalschätzers CE ist die Lösung der Gleichung (5) für die Trainingssequenzen tc1, tc2 der empfangenen Funkblöcke. Angenommen, das Kanalmodell KM mit fünf Kanalkoeffizienten h erlaubt eine Darstellung der empfangenen Daten entsprechend der Gleichungen (6) und (7), so zeigt der Exponent tc1 bzw. tc2, daß die entsprechenden Daten Teil der Trainingssequenzen tc1, tc2 sind.

$$\bar{D}_{s1} = \begin{bmatrix} d_5^{(tc1)} & d_4^{(tc1)} & .. & d_1^{(tc1)} \\ d_6^{(tc1)} & d_5^{(tc1)} & .. & d_2^{(tc1)} \\ .. & .. & .. & .. \\ d_{26}^{(tc1)} & d_{25}^{(tc1)} & .. & d_{22}^{(tc1)} \end{bmatrix} (6) \qquad \bar{D}_{s2} = \begin{bmatrix} d_5^{(tc2)} & d_4^{(tc2)} & .. & d_1^{(tc2)} \\ d_6^{(tc2)} & d_5^{(tc2)} & .. & d_2^{(tc2)} \\ .. & .. & .. & .. \\ d_{26}^{(tc2)} & d_{25}^{(tc2)} & .. & d_{22}^{(tc2)} \end{bmatrix} (7)$$

Die folgende Gleichung (8) ist eine Darstellung von Gleichung (5), wobei die Lösung mit Hilfe des Kriteriums der least squares möglich ist. Es gibt hierbei 22 Gleichungen für 10 unbekannte Kanalkoeffizienten h.

$$\left\| \left[\bar{D}_{s1} \quad \bar{D}_{s2}\right] \cdot \begin{bmatrix} \underline{h}_{s1} \\ \underline{h}_{s2} \end{bmatrix} - \underline{y} \right\| = e = \min \qquad (8)$$

Da die Matrizen $D_{s1}$ und die $D_{S2}$ unabhängig von den Eingangsdaten sind, ist es nicht notwendig, daß Kriterium der least square für jeden Funkblock einzeln zu lösen. Die Lösung kann dadurch ersetzt werden, daß eine Multiplikation mit einer Pseudoinversen der Matrix (Exponent P) nach Gleichung (9) durchgeführt wird:

$$\begin{bmatrix} \underline{h}_{s1} \\ \underline{h}_{s2} \end{bmatrix} = \left[\bar{D}_{s1} \quad \bar{D}_{s2}\right]^{-P} \cdot \underline{y} \qquad (9)$$

Zur Synchronisation des Gleichungssystems erfolgt eine Lösung für jede mögliche Synchronisationsposition des Funkblockes. Die Synchronisationsposition ist durch die Variable M symbolisiert. Die Synchronisation wird letztendlich durch ein Synchronisationsglied $Z^{-M}$ durchgeführt. Die vorstehend beschriebenen Berechnungen werden durch ein Rechenwerk RW durchgeführt. Die Lösung des Problems der least squares entspricht der Minimierung der Abweichung e von empfangenen Trainingssequenzen tc1, tc2 zu in zumindest zwei Kanalmodellen KM erzeugten Vergleichsdaten r.

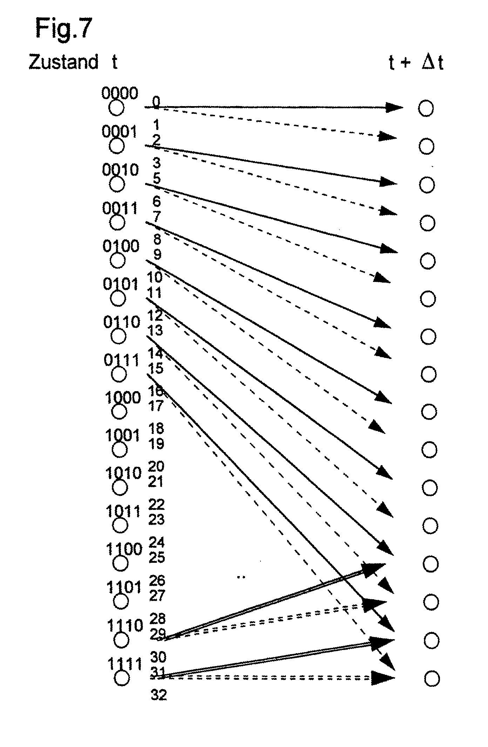

Als Detektor D kann ein Viterbi-Detektor benutzt werden. Bei Zugrundelegen eines Kanalmodells KM mit fünf Kanalkoeffizienten h hat dieses Filter mit endlicher Impulsantwort ein Gedächtnis von vier Datensymbolen. Bei der Übertragung von digitalen Daten sind damit 16 mögliche Zustände in der Vergangenheit möglich. Da ein Datensymbol zwei Werte (0 oder 1) angeben kann, so sind 32 Übergänge vom Zustand t zum Zustand t + $\Delta$t möglich. Diese Übergänge sind in FIG 7 gezeigt.

Die Zustände sind als binäre Zahlen dargestellt und die Nummern der Übergänge sind nahe des Ausgangszustandes angegeben. Durchgezogene Linien zeigen an, daß das letzte Symbol den Wert 0 hatte, und gestrichelte Linien, daß das letzte Symbol den Wert 1 hatte. Doppelt gezogene Linien führen zu einer Entscheidung für ein Symbol mit dem Wert 1 und einfach gezogene Linien zu einer Entscheidung für ein Symbol mit dem Wert 0.

Der Detektor D berücksichtigt zwei Signale mit jeweils einem Kanalmodell KM mit fünf Kanalkoeffizienten h. Deshalb gibt es 16 Zustände in der Vergangenheit für Signal 1 und 16 Zustände für Signal 2, d.h. zusammen ergibt das 256 mögliche Zustände. Werden weitere zwei neue Datensymbole empfangen, so führt es zu 256 multipliziert mit vier = 1024 Übergängen.

Tabelle 1 beschreibt die Beziehung zwischen dem übertragenen Datensymbol und einer Zustandsnummer.

Beide Signale haben ein Gedächtnis von vier Symbolen. X0 korrespondiert mit dem zuletzt übertragenen Symbol von Signal 1 und Y0 korrespondiert mit dem zuletzt übertragenen Datensymbol von Signal 2. X3 und Y3 stellen den Bezug zu den am weitesten in der Vergangenheit empfangenen Datensymbolen her. Um zur Zustandsnummer zu gelangen müssen die Werte in der Zeile über $y_i$ und $x_i$ addiert werden.

Die Sequenz 1000 1110 korrespondiert beispielsweise mit dem Zustand 142. Um zum nächsten Zustand zu gelangen, werden alle Symbole x und alle Symbole y um ein Element nach links verschoben. Die Datensymbole x3 und y3 werden nicht weiter berücksichtigt, währenddessen x0 mit y0 mit dem zuletzt empfangenen Symbolen aufgefüllt werden.

Die Übergangsnummern können aus Tabelle 2 abgeleitet werden. Die bekannte "Add Compare Select"-Operation des Viterbi-Algorithmus muß erweitert werden.

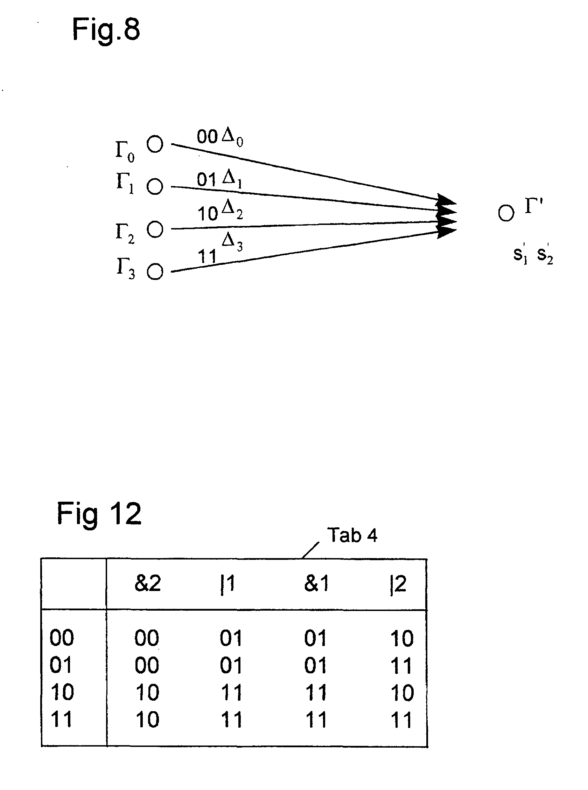

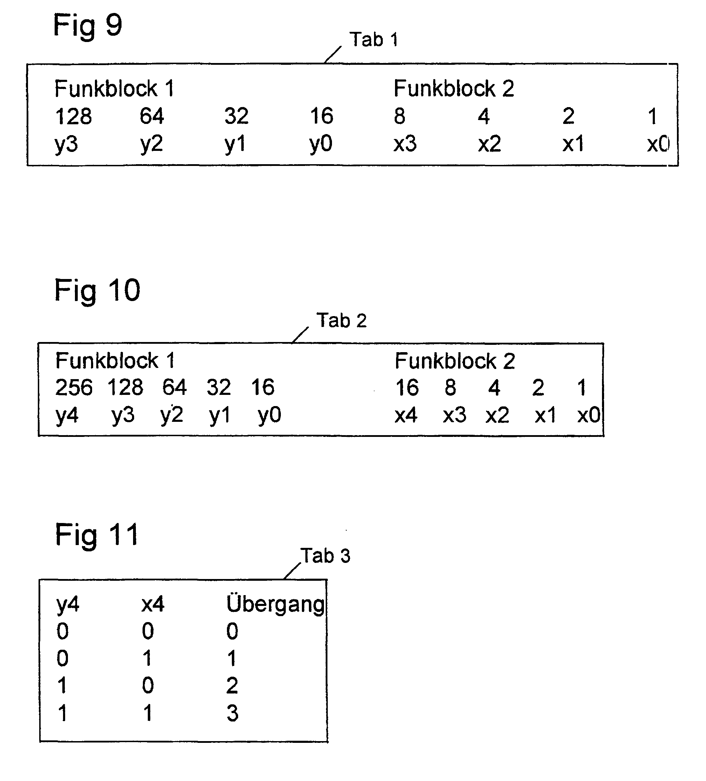

Für eine lokale "Add Compare Select"-Operation wird eine lokale Nummer entsprechend Tabelle 3 und Fig. 8 eingeführt. Vier Übergänge führen zu einem Zustand. Jeder Übergang (Fig. 8: 00 01 10 11) beginnt mit einem Ausgangszustand mit der Metrik $\Gamma_i$. $\Gamma'$ ist dabei nach folgender Gleichung abgeleitet:

$$\Gamma' = \min(\Gamma_i + \Delta_i)|_{i=0.3} \tag{10}$$

mit

$$\Delta_i = |y_i - r_i|^2 \tag{11}$$

Der Index i des letztendlich ausgewählten Übergangs (minimaler Metrikzuwachs) wird mit imin bezeichnet. Dabei gibt $\Delta_i$ die euklidische Distanz zwischen dem komplexen empfangenen Wert $y_i$ und einem komplexen Vergleichswert $r_i$ an. Es können jedoch auch andere Distanzen, z.B. eine Hammingdistanz verwendet werden.

Der Vergleichswert $r_i$ mit i=0..1023 ergibt sich aus einer Addition von zwei Faltungsergebnissen der Werte aller möglicher Zustandsnummern nach Tabelle 2 (10 bit -> $2^{10}$ = 1024 Möglichkeiten), wobei die Werte aus dem Wertebereich (0, 1) in den Wertebereich (-1, 1) überführt werden, mit den entsprechenden Werten der Kanalkoeffizienten (2 x 5 bit) $h_{s1}$, $h_{s2}$.

Zur Bestimmung der sog. Softoutputs $s'_1$, $s'_2$ - mit einer Zuverlässigkeitsinformation versehene Entscheidungen - dienen die folgenden Ausführungen. Die Datensymbole x4 und y4 sind für den Übergang imin definiert. Um den Softoutput für x4 ($s'_1$) zu erlangen, wird die Entscheidung für y4 als korrekt und konstant angenommen und die Differenz zwischen der Entscheidung mit x4=0 und x4=1 bewertet. Die Gleichung (12) beschreibt diese Berechnung. Die logischen Opperatoren der Indizes sind aus der Programmiersprache C abgeleitet.

$$s'_1 = (\Gamma_{imin\&2} + \Delta_{imin\&2}) - (\Gamma_{imin|1} + \Delta_{imin|1}) \tag{12}$$

Für das Datensymbol y4 wird die gleiche Prozedur angewendet. Gleichung (13) beschreibt dies:

$$s'_2 = (\Gamma_{imin\&1} + \Delta_{imin\&1}) - (\Gamma_{imin|2} + \Delta_{imin|2}) \tag{13}$$

Z.B. bedeutet nach Tabelle4 "&2", daß der Wert für y4 erhalten bleibt und x4 auf "0" gesetzt wird und "|1", daß der Wert für y4 erhalten bleibt und x4 auf "1" gesetzt wird.

Die Softoutputs $s'_1$, $s'_2$ können im Dekoder DEC1 bzw. DEC2 zur Verbesserung der der getroffenen Entscheidungen verwendet werden. Außer Viterbi-Dekodern können auch Dekoder für Blockcodes verwendet werden.

**Patentansprüche**

1. Verfahren zur Datenübertragung über eine Funkschnittstelle zwischen Funkstationen (BS, MS) in einem Funk-Kommunikationssystem, bei dem

    - sendeseitig zu übertragende Daten (d) in Funkblöcken gruppiert werden, wobei die Funkblöcke jeweils zusätzliche Symbole einer Trainingssequenz (tc1, tc2) enthalten,
    - gleichzeitig zumindest zwei Funkblöcke mit unterschiedlichen Trainingssequenzen (tc1, tc2) in einem durch einen Frequenzbereich und einen Zeitschlitz bezeichneten Kanal der Funkschnittstelle übertragen werden,

- empfangsseitig pro Kanal zumindest zwei Kanalschätzungen unter Kenntnis der unterschiedlichen Trainingssequenzen (tc1, tc2) durchgeführt werden, und

- pro Kanal für zumindest zwei gleichzeitig übertragene Funkblöcke jeweils eine Detektion der Daten (d) basierend auf den getrennten Kanalschätzungen durchgeführt wird.

2. Verfahren nach Anspruch 1, bei dem
empfangsseitig die Daten (d) der zumindest zwei Funkblöcke detektiert werden.

3. Verfahren nach Anspruch 1, bei dem
empfangsseitig die Daten (d) eines Funkblocks detektiert werden, wobei die Kenntnis über den weiteren Funkblock zur Verbesserung der Detektion benutzt wird.

4. Verfahren nach einem der vorherigen Ansprüche, bei dem
eine Synchronisation von gleichzeitig im gleichen Kanal sendenden Funkstationen (BS, MS) erfolgt.

5. Verfahren nach einem der Ansprüche 1 bis 3, bei dem
eine empfangsseitige Synchronisation der empfangenen Daten (d) erfolgt.

6. Verfahren nach einem der Ansprüche 4 oder 5, bei dem
durch die Synchronisation eine zeitliche Abweichung des Eintreffens der zumindest zwei Funkblöcke bei der empfangsseitigen Funkstation (BS, MS) eingestellt wird, die kleiner als eine Symbollänge ist.

7. Verfahren nach einem der vorherigen Ansprüche, bei dem
einer sendenden Funkstation (MS, BS) zumindest zwei Trainingssequenzen (tc1, tc2) zugewiesen sind.

8. Verfahren nach einem der vorherigen Ansprüche, bei dem
die Funkstationen als Mobilstationen (MS) oder Basisstationen (BS) eines digitalen Mobilfunknetzes ausgebildet sind.

9. Verfahren nach Anspruch 8, bei dem
in Aufwärtsrichtung und Abwärtsrichtung unterschiedliche Übertragungsraten verwendet werden.

10. Verfahren nach Anspruch 9, bei dem
in Aufwärtsrichtung ein Funkblock mit einer höheren Datenrate als in Abwärtsrichtung verwendet wird.

11. Verfahren nach einem der vorherigen Ansprüche, bei dem
die übertragenen Daten (d) entsprechend eines Paketdatendienstes übertragen werden.

12. Verfahren nach einem der vorherigen Ansprüche, bei dem
für die Detektion eine funkblockbezogene Kanalschätzung unter Auswertung der zumindest zwei Trainingssequenzen (tc1, tc2) vorgenommen wird.

13. Empfangseinrichtung für Daten (d), die über eine Funkschnittstelle zwischen Funkstationen (BS, MS) in einem Funk--Kommunikationssystem übertragen werden, mit

- einem Kanalschätzer (CE) zur gleichzeitigen Kanalschätzung für zumindest zwei gleichzeitig im gleichen, durch einen Frequenzkanal und einen Zeitschlitz bezeichneten Kanal der Funkschnittstelle übertragene Funkblöcke, der pro Kanal zumindest zwei innerhalb der Funkblöcke zusätzlich zu den Daten (d) übertragene verbindungsindividuelle Trainingssequenzen (tc1, tc2) auswertet und jeweils Kanalkoeffizienten (h) bestimmt,

- einem Detektor (D) zur jeweiligen Datendetektion für die zumindest zwei Funkblöcke unter Kenntnis der zumindest zwei getrennt bestimmten Kanalkoeffizienten (h).

14. Empfangseinrichtung nach Anspruch 11, bei der
der Kanalschätzer (CE) derartig ausgeprägt ist, daß gleichzeitig zumindest zwei Sätze von Kanalkoeffizienten (h) bestimmt werden, indem für empfangene Trainingssequenzen (tc1, tc2) eine Minimierung der Abweichung von empfangenen Daten (y) zu in zumindest zwei Kanalmodellen (KM) mit Kanalkoeffizienten (h) erzeugten Vergleichsdaten (r) vorgenommen wird.

**15.** Empfangseinrichtung nach Anspruch 13 oder 14, bei der
der Detektor (D) derartig ausgeprägt ist, daß zur Anwendung eines Viterbi-Algorithmus zumindest vier Übergänge von vorhergehenden Detektionszuständen $\Gamma_i$ zu einem neuen Detektionszustand $\Gamma'$ betrachtet werden und daß der neue Zustand entsprechend der Gleichung $\Gamma'=\min(\Gamma_i+\Delta_i)|_{i=0.3}$ bestimmt wird, wobei $\Delta_i$ die euklidische Distanz zwischen einem empfangenen Symbol ($y_i$) und einem Vergleichssymbol ($r_i$) angibt.

**16.** Empfangseinrichtung nach Anspruch 15,
mit zumindest einem Dekoder (DEC1, DEC2), der sogenannte Softoutputs $s'_1$, $s'_2$ berücksichtigt, die nach

$$s'_1 = (\Gamma_{imin\&2} + \Delta_{imin\&2}) - (\Gamma_{imin|1} + \Delta_{imin|1}) \text{ und } s'_2 = (\Gamma_{imin\&1} + \Delta_{imin\&1}) - (\Gamma_{imin|2} + \Delta_{imin|2})$$

berechnet sind.

**17.** Empfangseinrichtung nach einem der Ansprüche 13 bis 16,
die als Teil einer Mobilstation (MS) oder einer Basisstation (BS) eines digitalen Mobilfunknetzes ausgeprägt ist.

## Claims

**1.** Method for data transmission via an air interface between radio stations (BS, MS) in a radio communications system, in which

- data (d) to be transmitted are grouped into message blocks at the transmitting end, the message blocks respectively containing additional symbols of a training sequence (tc1, tc2),
- at least two message blocks with different training sequences (tc1, tc2) are simultaneously transmitted on a channel of the air interface designated by a frequency band and a time slot,
- at the receiving end at least two channel estimates are carried out per channel with knowledge of the different training sequences (tc1, tc2), and
- for at least two simultaneously transmitted message blocks for the data (d) are respectively detected per channel on the basis of the separate channel estimates.

**2.** Method according to Claim 1, in which the data (d) of the at least two message blocks are detected at the receiving end.

**3.** Method according to Claim 1, in which the data (d) of a message block are detected at the receiving end, the knowledge of the further message block being used to improve the detection.

**4.** Method according to one of the preceding claims, in which radio stations (BS, MS) simultaneously transmitting on the same channel are synchronized.

**5.** Method according to one of Claims 1 to 3, in which the received data (d) are synchronized at the receiving end.

**6.** Method according to one of Claims 4 or 5, in which a temporal deviation in the arrival of the at least two message blocks at the radio station (BS, MS) at the receiving end which is smaller than a symbol length is set by the synchronization.

**7.** Method according to one of the preceding claims, in which at least two training sequences (tc1, tc2) are allocated to a transmitting radio station (MS, BS).

**8.** Method according to one of the preceding claims, in which the radio stations are designed as mobile stations (MS) or base stations (BS) of a digital mobile radio network.

**9.** Method according to Claim 8, in which different transmission rates are used in the upward direction and downward direction.

**10.** Method according to Claim 9, in which a message block with a higher data rate is used in the upward direction than in the downward direction.

**11.** Method according to one of the preceding claims, in which the transmitted data (d) are transmitted in accordance with a packet data service.

**12.** Method according to one of the preceding claims, in which the detection is carried out by evaluating the at least two training sequences (tc1, tc2) in order to obtain a channel estimation referred to message block.

**13.** Receiver for data (d) which are transmitted via an air interface between radio stations (BS, MS) in a radio communications system, having

- a channel estimator (CE) for simultaneous channel estimation of at least two message blocks simultaneously transmitted in the same channel of the air interface designated by a frequency band and a time slot, which channel estimator evaluates per channel at least two connection-specific training sequences (tc1, tc2) transmitted within the message blocks in addition to the data (d), and determines channel coefficients (h) in each case, and
- a detector (D) for respectively detecting data for the at least two message blocks with knowledge of the at least two separately determined channel coefficients (h).

**14.** Receiver according to Claim 11, in which the channel estimator (CE) is **characterized in** such a way that at least two sets of channel coefficients (h) are determined simultaneously by undertaking for received training sequences (tc1, tc2) a minimization of the deviation of received data (y) relative to reference data (r) elevated in at least two channel models (KM) with channel coefficients (h).

**15.** Receiver according to Claim 13 or 14, in which the detector (D) is **characterized in** such a way that in order to apply a Viterbi algorithm at least four transitions from previous detection states $\Gamma_i$ to a new detection state $\Gamma'$ are considered, and that the new detection state is determined in accordance with the equation $\Gamma'=\min(\Gamma_i+\Delta_i)\,|_{i=0.3}$, $\Delta_i$ specifying the euclidean distance between a received symbol ($y_i$) and a reference symbol ($r_i$).

**16.** Receiver according to Claim 15, having at least one decoder (DEC1, DEC2) which takes account of so-called soft outputs $s'_1$, $s'_2$ which are calculated using

$$s_1^{'} = (\Gamma_{imin\&2} + \Delta_{imin\&2}) - (\Gamma_{imin|1} + \Delta_{imin|1}) \text{ and } s_2^{'} = (\Gamma_{imin\&1} + \Delta_{imin\&1})-(\Gamma_{imin|2} +\Delta_{imin|2}) \;.$$

**17.** Receiver according to one of Claims 13 to 16, which is characterized as part of a mobile station (MS) or a base station (BS) of a digital mobile radio network.

**Revendications**

**1.** Procédé pour la transmission de données via une interface radio entre des stations radio (BS, MS) dans un système de radiocommunication, dans lequel

- à l'émission, des données (d) à transmettre sont réunies dans des blocs radio, les blocs radio contenant à chaque fois des symboles supplémentaires d'une séquence d'entraînement (tc1, tc2),
- au moins deux blocs radio contenant des séquences d'entraînement (tc1, tc2) différentes sont transmis simultanément dans un canal de l'interface radio, lequel est défini par une gamme de fréquences et un intervalle de temps,
- à la réception, au moins deux estimations de canal sont effectuées par canal, en connaissance des séquences d'entraînement (tc1, tc2) différentes, et
- par canal, pour au moins deux blocs radio transmis simultanément, respectivement une détection des données (d) est effectuée sur la base des estimations de canal séparées.

**2.** Procédé selon la revendication 1, dans lequel, à la réception, les données (d) des au moins deux blocs radio sont détectées.

**3.** Procédé selon la revendication 1, dans lequel, à la réception, les données (d) d'un bloc radio sont détectées, la connaissance de l'autre bloc radio étant utilisée pour améliorer la détection.

**4.** Procédé selon l'une des revendications précédentes, dans lequel a lieu une synchronisation des stations radio (BS, MS) émettant simultanément dans le même canal.

**5.** Procédé selon l'une des revendications 1 à 3, dans lequel a lieu une synchronisation à la réception des données (d) reçues.

**6.** Procédé selon l'une des revendications 4 ou 5, dans lequel, grâce à la synchronisation, un écart de temps de l'arrivée des au moins deux blocs radio à la station radio (BS, MS) réceptrice est mis au point, qui est inférieur à une longueur de symbole.

**7.** Procédé selon l'une des revendications précédentes, dans lequel une station radio (MS, BS) émettrice se voit assigner au moins deux séquences d'entraînement (tc1, tc2).

**8.** Procédé selon l'une des revendications précédentes, dans lequel les stations radio sont réalisées comme stations mobiles (MS) ou stations de base (BS) d'un réseau numérique de radiocommunications mobiles.

**9.** Procédé selon la revendication 8, dans lequel on utilise des vitesses de transmission différentes dans le sens montant et le sens descendant.

**10.** Procédé selon la revendication 9, dans lequel on utilise dans le sens montant un bloc radio à plus haut débit que dans le sens descendant.

**11.** Procédé selon l'une des revendications précédentes, dans lequel les données (d) transmises sont transmises selon un service en mode paquet.

**12.** Procédé selon l'une des revendications précédentes, dans lequel on procède pour la détection à une estimation de canal spécifique au bloc radio, en évaluant les au moins deux séquences d'entraînement (tc1, tc2).

**13.** Dispositif de réception pour des données (d) transmises via une interface radio entre des stations radio (BS, MS) dans un système de radiocommunication, comprenant

- un estimateur de canal (CE) destiné à l'estimation simultanée du canal pour au moins deux blocs radio transmis simultanément dans le même canal de l'interface radio, défini par un canal de fréquences et un intervalle de temps, qui évalue par canal au moins deux séquences d'entraînement (tc1, tc2) indépendantes de la liaison et transmises, en plus des données (d), à l'intérieur des blocs radio, et qui détermine à chaque fois des coefficients de canal (h),
- un détecteur (D) destiné à la détection de données pour les au moins deux blocs radio, en connaissance des au moins deux coefficients de canal (h) déterminés séparément.

**14.** Dispositif de réception selon la revendication 11, dans lequel l'estimateur de canal (CE) est réalisé de telle sorte qu'au moins deux jeux de coefficients de canal (h) sont déterminés simultanément, en procédant pour des séquences d'entraînement (tc1, tc2) reçues, à une minimisation de l'écart entre des données reçues (y) et des données de comparaison (r) générées dans au moins deux modèles de canal (KM) dotés de coefficients de canal (h).

**15.** Dispositif de réception, selon la revendication 13 ou 14, dans lequel le détecteur (D) est réalisé de telle sorte que pour appliquer un algorithme de Viterbi, au moins quatre transitions d'états de détection précédents $\Gamma_i$ à un nouvel état de détection $\Gamma'$ sont considérées et que le nouvel état est déterminé selon l'équation $\Gamma' = \min(\Gamma_i + \Delta_j)|_{i=0,3}$, $\Delta_i$ indiquant la distance euclidienne entre un symbole reçu ($y_i$) et un symbole de comparaison ($r_i$).

**16.** Dispositif de réception selon la revendication 15, comprenant au moins un décodeur (DEC1, DEC2) qui tient compte de "softoutputs" $s'_1$, $s'_2$ calculés selon

$$s'_1 = (\Gamma_{imin\&2} + \Delta_{imin\&2}) - ((\Gamma_{imin|1} + \Delta_{imin|1}) \text{ et } s'_2 = (\Gamma_{imin\&1} + \Delta_{imin\&1} - ((\Gamma_{imin|2} + \Delta_{imin|2}).$$

**17.** Dispositif de réception selon l'une des revendications 13 à 16, réalisé comme élément d'une station mobile (MS) ou d'une station de base (BS) d'un réseau de radiocommunication mobile numérique.

# Fig.1

Störer

MS

MS

MS

BS

OMC

BSC

MSC

PSTN

## Fig.2

MS

24700 bit/(s*channel)

24700 bit/(s*channel)

MS

BS

## Fig.3

MS

49400 bit/(s*channel)

BS

## Fig.4

MS

24700 bit/(s*channel)

12350 bit/(s*channel)

24700 bit/(s*channel)

12350 bit/(s*channel)

MS

BS

## Fig.5

Empfangseinrichtung

z → CE → y → D → $d_{s1}$ → DEC1/DEC2 →

$h_{s1}$

$h_{s2}$

$d_{s2}$

# Fig.6

# Fig.7

Zustand  t                                    t +  Δt

# Fig.8

$\Gamma_0$ ◯ —— $00\,\Delta_0$

$\Gamma_1$ ◯ —— $01\,\Delta_1$

$\Gamma_2$ ◯ —— $10\,\Delta_2$    ◯ $\Gamma'$

$\Gamma_3$ ◯ —— $11\,\Delta_3$      $s_1'\ \ s_2'$

# Fig 12

Tab 4

|      | &2 | \|1 | &1 | \|2 |
|------|----|-----|----|-----|
| 00   | 00 | 01  | 01 | 10  |
| 01   | 00 | 01  | 01 | 11  |
| 10   | 10 | 11  | 11 | 10  |
| 11   | 10 | 11  | 11 | 11  |

## Fig 9

Tab 1

| Funkblock 1 | | | | Funkblock 2 | | | |
|---|---|---|---|---|---|---|---|
| 128 | 64 | 32 | 16 | 8 | 4 | 2 | 1 |
| y3 | y2 | y1 | y0 | x3 | x2 | x1 | x0 |

## Fig 10

Tab 2

| Funkblock 1 | | | | | Funkblock 2 | | | | |
|---|---|---|---|---|---|---|---|---|---|
| 256 | 128 | 64 | 32 | 16 | 16 | 8 | 4 | 2 | 1 |
| y4 | y3 | y2 | y1 | y0 | x4 | x3 | x2 | x1 | x0 |

## Fig 11

Tab 3

| y4 | x4 | Übergang |
|---|---|---|
| 0 | 0 | 0 |
| 0 | 1 | 1 |
| 1 | 0 | 2 |
| 1 | 1 | 3 |